# EUROPEAN PATENT APPLICATION

(11) **EP 4 675 899 A1**
(43) Date of publication of application: **07.01.2026**
(21) Application number: 24763603.8
(22) Date of filing: 14.02.2024
(51) Int. Cl.: H02K 15/02, H02K 15/14, H02K 16/00

(54) **METHOD FOR MANUFACTURING AXIAL GAP MOTOR**

(30) Priority: 27.02.2023 JP 2023028192
(71) Applicant: DENSO CORPORATION, Kariya-city, Aichi 448-8661 (JP)
(72) Inventor: OZAWA, Naoto, Kariya-city, Aichi 448-8661 (JP); TAKEDA, Hiroaki, Kariya-city, Aichi 448-8661 (JP)
(74) Representative: TBK
(86) International application number: PCT/JP2024/004931
(87) International publication number: WO 2024/181120

(57) **Abstract**

An axial gap motor (10) has: a stator main body part (22) arranged at a center thereof in an axial direction of a rotating shaft (31); a first rotor main body part (35) arranged on a first side of the stator main body part in the axial direction so as to face the stator main body part; and a second rotor main body part (43) arranged on a second side, which is opposite to the first side, of the stator main body part in the axial direction so as to face the stator main body part. A method of manufacturing the axial gap motor includes an assembly step of moving a central member (20) including the stator main body part, a first member (30) including the first rotor main body part and a second member (40) including the second rotor main body part relative to each other so as to cause the first rotor main body part and the second rotor main body part to simultaneously approach or alternately gradually approach the stator main body part.

## Description

### [CROSS-REFERENCE TO RELATED APPLICATIONS]

The present application is based on Japanese Patent Application No. 2023-028192, filed on February 27, 2023, the contents of which are incorporated by reference into the present application.

### [TECHNICAL FIELD]

The present disclosure relates to methods of manufacturing axial gap motors.

### [BACKGROUND ART]

Conventionally, axial gap motors have been known in which a stator and a rotor are arranged to face each other in an axial direction of a rotating shaft. Moreover, an axial gap motor has been known which has a stator main body part arranged at a center thereof in the axial direction, and first and second rotor main body parts arranged to sandwich the stator main body part therebetween in the axial direction (see, for example, Patent Document 1). Furthermore, according to a method of manufacturing such an axial gap motor, a central member is first manufactured by fixing a tubular housing to an outer periphery of the stator main body part. Then, by moving the housing of the central member, the stator main body part is caused to approach the first rotor main body part from above. Thereafter, the second rotor main body part is caused to approach the stator main body part from above. In this manner, the first rotor main body part and the second rotor main body part are arranged so as to sandwich the stator main body part therebetween.

### [PRIOR ART LITERATURE]

### [PATENT LITERATURE]

[Patent Document 1]: Japanese Patent No. JP 6365516 B2

### [SUMMARY OF THE INVENTION]

With the above-described method of manufacturing an axial gap motor, when the stator main body part is caused to approach the first rotor main body part from above, a high magnetic attraction force acts on the stator main body part in the direction toward the first rotor main body part. Consequently, in the central member that includes the stator main body part, high stress may be applied to a fixing portion between the stator main body part and the housing. As a result, the fixing portion between the stator main body part and the housing may be damaged by the high stress. Hence, a strong fixing structure is required for the fixing portion between the stator main body part and the housing, resulting in an increase in the weight of the central member.

An object of the present disclosure is to provide a method of manufacturing an axial gap motor, with which it is possible to prevent high stress from being applied to a central member of the axial gap motor.

According to a first aspect of the present disclosure, there is provided a method of manufacturing an axial gap motor. The axial gap motor has: a stator main body part arranged at a center thereof in an axial direction of a rotating shaft; a first rotor main body part arranged on a first side of the stator main body part in the axial direction so as to face the stator main body part; and a second rotor main body part arranged on a second side, which is opposite to the first side, of the stator main body part in the axial direction so as to face the stator main body part. The method of manufacturing the axial gap motor includes an assembly step of moving a central member including the stator main body part, a first member including the first rotor main body part and a second member including the second rotor main body part relative to each other so as to cause the first rotor main body part and the second rotor main body part to simultaneously approach or alternately gradually approach the stator main body part.

According to the above method, in the assembly step, the central member, the first member and the second member are moved relative to each other so as to cause the first rotor main body part and the second rotor main body part to simultaneously approach or alternately gradually approach the stator main body part. Consequently, when the first rotor main body part is located at a position close to the stator main body part, the second rotor main body part is also located at a position close to the stator main body part. Thus, the stator main body part is subjected to both a magnetic attraction force in the direction toward the first rotor main body part and a magnetic attraction force in the direction toward the second rotor main body part. Hence, it becomes possible to prevent a high magnetic attraction force from acting on the stator main body part in only one direction, for example from only the first side of the stator main body part. As a result, it becomes possible to prevent high stress from being applied to the central member that includes the stator main body part.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is a schematic cross-sectional view of an axial gap motor according to an embodiment;
FIG. 2 is a schematic cross-sectional view for explaining a method of manufacturing the axial gap motor according to the embodiment;
FIG. 3 is another schematic cross-sectional view for explaining the method of manufacturing the axial gap motor according to the embodiment;
FIG. 4 is a schematic cross-sectional view for explaining another method of manufacturing the axial gap motor according to the embodiment;
FIG. 5 is an exploded perspective view showing parts of an axial gap motor according to a modification; and
FIG. 6 is a schematic cross-sectional view for explaining a method of manufacturing an axial gap motor according to another modification.

### [EMBODIMENTS FOR CARRYING OUT THE INVENTION]

Hereinafter, an embodiment of a method of manufacturing an axial gap motor will be described with reference to the drawings. It should be noted that in the drawings, for the sake of convenience of explanation, some parts are shown in an exaggerated or simplified manner. Moreover, it also should be noted that some ratios between dimensions of parts shown in the drawings are different from the actual ratios.

### (Configuration of Axial Gap Motor 10)

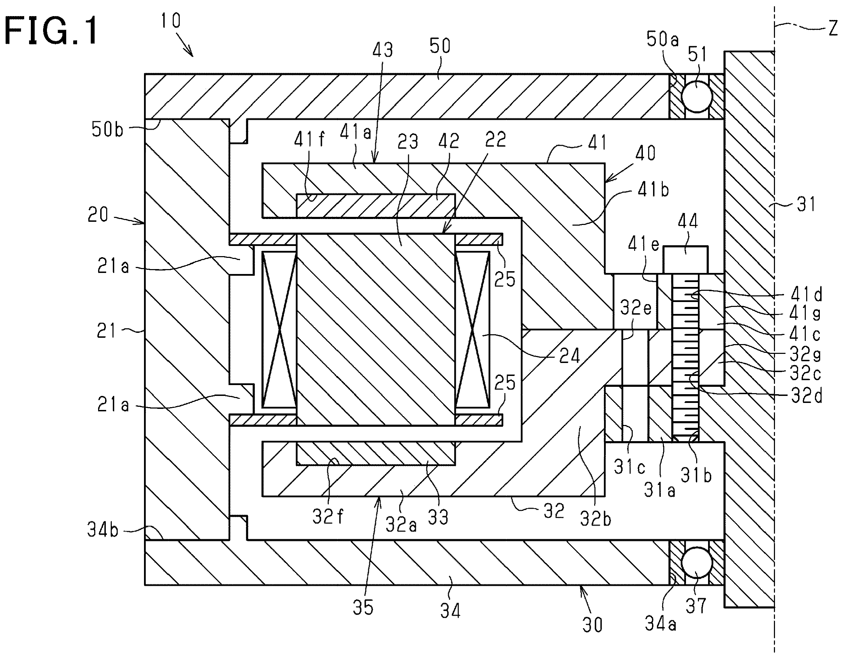

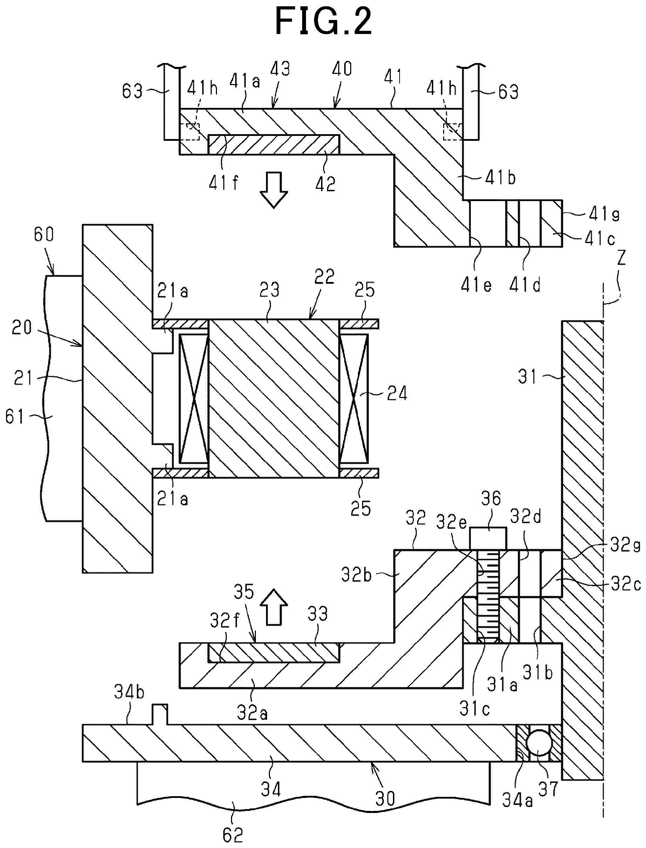

As shown in FIGS. 1 and 2, an axial gap motor 10 is formed by assembling a central member 20, a first member 30, a second member 40, etc. It should be noted that FIGS.1 and 2 schematically show cross sections of only those parts of the axial gap motor 10 which are located on one side of a central axis Z of the axial gap motor 10.

### (Configuration of Central Member 20)

The central member 20 includes a tubular housing 21 and a stator main body part 22. The housing 21 has a pair of locking protrusions 21a. The pair of locking protrusions 21a are provided apart from each other in the axial direction in the housing 21. Moreover, each of the locking protrusions 21a protrudes radially inward from the entire circumference of an inner circumferential surface of the housing 21.

The stator main body part 22 has a plurality of stator cores 23 arranged in a circumferential direction, coils 24 wound respectively around the stator cores 23, and a pair of plate-shaped brackets 25. The pair of brackets 25 are fixed respectively to two axial end portions of each of the stator cores 23. Moreover, the pair of brackets 25 are arranged so as to sandwich the pair of locking protrusions 21a therebetween. Consequently, the outer periphery of the stator main body part 22 is fixed to the housing 21 by the pair of brackets 25.

### (Configuration of First Member 30)

The first member 30 includes a rotating shaft 31, a first core member 32, a plurality of first magnets 33 and a first end plate 34. The rotating shaft 31 has a flange portion 31a extending radially outward. The flange portion 31a has flange fixing holes 31b and flange temporary fixing holes 31c, each of which penetrates the flange portion 31a in the axial direction. In the present embodiment, the flange fixing holes 31b and the flange temporary fixing holes 31c are provided side by side in the radial direction. Moreover, the flange fixing holes 31b are arranged apart from each other in the circumferential direction. Similarly, the flange temporary fixing holes 31c are also arranged apart from each other in the circumferential direction.

The first core member 32 has an annular first rotor core portion 32a, a first tubular portion 32b extending in the axial direction from an inner periphery of the first rotor core portion 32a, and a first inward extension portion 32c extending radially inward from a distal end of the first tubular portion 32b. The first inward extension portion 32c has first fixing holes 32d and first temporary fixing holes 32e, each of which penetrates the first inward extension portion 32c in the axial direction. In the present embodiment, the first fixing holes 32d and the first temporary fixing holes 32e are provided side by side in the radial direction. Moreover, the first fixing holes 32d are arranged apart from each other in the circumferential direction. Similarly, the first temporary fixing holes 32e are also arranged apart from each other in the circumferential direction. The first rotor core portion 32a has a plurality of first accommodation recesses 32f that open in a direction facing the stator main body part 22 and are arranged in the circumferential direction. The first magnets 33 are respectively accommodated and fixed in the first accommodation recesses 32f. In the present embodiment, the first rotor core portion 32a and the first magnets 33 together constitute a first rotor main body part 35. The first rotor main body part 35 is arranged on a first side (i.e., the lower side in FIG. 1) of the stator main body part 22 in the axial direction so as to face the stator main body part 22. The first inward extension portion 32c has a first central hole 32g through which the rotating shaft 31 penetrates. The rotating shaft 31 is fixed to the first core member 32 in a state of penetrating through the first central hole 32g. In addition, when the first member 30 is in a standalone state, as shown in FIG. 2, the rotating shaft 31 and the first core member 32 are fixed together by first bolts 36 that penetrate through the respective flange temporary fixing holes 31c and the respective first temporary fixing holes 32e. In the present embodiment, the first bolts 36 are screwed into female threads formed in the respective flange temporary fixing holes 31c.

The first end plate 34 is formed in a discoid shape. The first end plate 34 has a first bearing holding hole 34a at its center. The rotating shaft 31 is rotatably supported in the first bearing holding hole 34a via a first bearing 37. The first bearing 37 is implemented by a ball bearing that includes an outer ring, an inner ring and balls; the outer ring is fixed in the first bearing holding hole 34a and the inner ring is fixed to the rotating shaft 31. An outer edge portion of the first end plate 34 constitutes a first abutment portion 34b against which a first end of the housing 21 abuts in the axial direction.

### (Configuration of Second Member 40)

The second member 40 includes a second core member 41 and a plurality of second magnets 42.

The second core member 41 has an annular second rotor core portion 41a, a second tubular portion 41b extending in the axial direction from an inner periphery of the second rotor core portion 41a, and a second inward extension portion 41c extending radially inward from a distal end of the second tubular portion 41b. The second inward extension portion 41c has second fixing holes 41d and removal holes 41e, each of which penetrates the second inward extension portion 41c in the axial direction. In the present embodiment, the second fixing holes 41d and the removal holes 41e are provided side by side in the radial direction. Moreover, the second fixing holes 41d are arranged apart from each other in the circumferential direction. Similarly, the removal holes 41e are also arranged apart from each other in the circumferential direction. The second rotor core portion 41a has a plurality of second accommodation recesses 41f that open in a direction facing the stator main body part 22 and are arranged in the circumferential direction. The second magnets 42 are respectively accommodated and fixed in the second accommodation recess 41f. In the present embodiment, the second rotor core portion 41a and the second magnets 42 together constitute a second rotor main body part 43. The second rotor main body part 43 is arranged on a second side (i.e., the upper side in FIG. 1) of the stator main body part 22 in the axial direction so as to face the stator main body part 22; the second side is opposite to the first side. The second inward extension portion 41c has a second central hole 41g through which the rotating shaft 31 penetrates. The second central hole 41g is formed so that the rotating shaft 31 can be smoothly inserted therethrough. As shown in FIG. 1, the second core member 41, the first core member 32 and the rotating shaft 31 are fixed together by second bolts 44 that penetrate through the respective second fixing holes 41d, the respective first fixing holes 32d and the respective flange fixing holes 31b. In the present embodiment, the second bolts 44 are screwed into female threads formed in the respective flange fixing holes 31b.

Moreover, as shown in FIG. 1, the axial gap motor 10 also includes a second end plate 50. The second end plate 50 is formed in a discoid shape. The second end plate 50 has a second bearing holding hole 50a at its center. The rotating shaft 31 is rotatably supported in the second bearing holding hole 50a via a second bearing 51. The second bearing 51 is also implemented by a ball bearing that includes an outer ring, an inner ring and balls; the outer ring is fixed in the second bearing holding hole 50a, and the inner ring is arranged so that it can support the rotating shaft 31. In addition, the inner ring of the second bearing 51 is formed so that the rotating shaft 31 can be smoothly inserted therethrough. An outer edge portion of the second end plate 50 constitutes a second abutment portion 50b against which a second end of the housing 21 abuts in the axial direction.

Next, explanation will be given of a method of manufacturing the axial gap motor 10 configured as described above.

The method of manufacturing the axial gap motor 10 includes an assembly step, a core fixing step, a removal step and a closing step.

In the assembly step, the central member 20, the first member 30 and the second member 40 are moved relative to each other so that the first rotor main body part 35 and the second rotor main body part 43 simultaneously approach the stator main body part 22.

Specifically, as shown in FIG. 2, in the present embodiment, in the assembly step, the first member 30 and the second member 40 are moved simultaneously at the same speed (see the white arrows in FIG. 2), with the central member 20 fixed immovably.

More specifically, first, the housing 21 of the central member 20 is held by a central holding part 61 of a manufacturing apparatus 60. Moreover, the first end plate 34 of the first member 30 is held by a first holding part 62 of the manufacturing apparatus 60; and the second core member 41 of the second member 40 is held by a second holding part 63 of the manufacturing apparatus 60. In the present embodiment, the second holding part 63 is located above the first holding part 62 and has claw portions; the claw portions can support the second member 40 in a suspended state by engaging with engaging portions 41h that are provided in inner and outer peripheral portions of the second core member 41. Then, the first member 30 and the second member 40 are moved simultaneously at the same speed by driving actuators connected respectively with the first holding part 62 and the second holding part 63.

Further, in the assembly step, the rotating shaft 31 is inserted through the second central hole 41g in a non-press-fit manner. Furthermore, in the assembly step, the first member 30 is moved until the first abutment portion 34b of the first end plate 34 is brought into abutment with the first end of the housing 21 in the axial direction. Similarly, in the assembly step, the second member 40 is moved until the second tubular portion 41b and the second inward extension portion 41c of the second core member 41 are respectively brought into abutment with the first tubular portion 32b and the first inward extension portion 32c of the first core member 32. In the present embodiment, the assembly step is set so that the first abutment portion 34b is brought into abutment with the housing 21 immediately before the second core member 41 is brought into abutment with the first core member 32. Moreover, in the present embodiment, the assembly step is set so that the distance between the first rotor main body part 35 and the stator main body part 22 and the distance between the second rotor main body part 43 and the stator main body part 22 are always kept equal as much as possible.

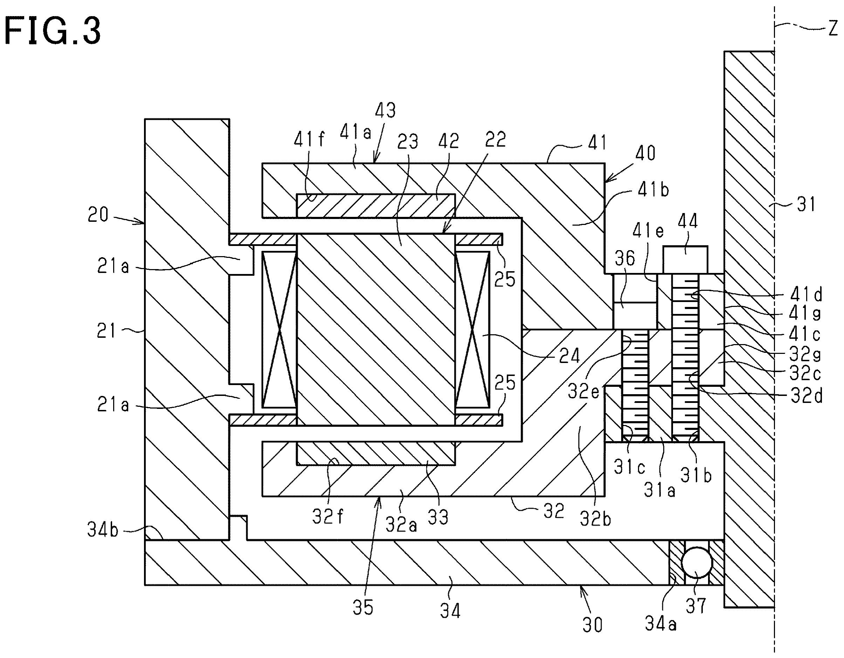

Next, as shown in FIG. 3, in the core fixing step, the second core member 41 is fixed to the rotating shaft 31. Specifically, in the core fixing step, the second core member 41, the first core member 32 and the rotating shaft 31 are fixed together by the second bolts 44 that penetrate through the respective second fixing holes 41d, the respective first fixing holes 32d and the respective flange fixing holes 31b.

Next, in the removal step, the first bolts 36 are removed from the respective first temporary fixing holes 32e and the respective flange temporary fixing holes 31c through the respective removal holes 41e.

Next, in the closing step, the second end plate 50 is mounted to the housing 21 to close the inside of the housing 21. Specifically, in the closing step, the second end plate 50 is moved until the second abutment portion 50b of the second end plate 50 is brought into abutment with the second end of the housing 21 in the axial direction. Moreover, in the closing step, the rotating shaft 31 is inserted through the second bearing 51 in a non-press-fit manner. As a result, the manufacture of the axial gap motor 10 is completed.

According to the present embodiment, the following advantageous effects can be achieved.
(1) In the present embodiment, in the assembly step, the central member 20, the first member 30 and the second member 40 are moved relative to each other, thereby causing the first rotor main body part 35 and the second rotor main body part 43 to simultaneously approach the stator main body part 22. Consequently, when the first rotor main body part 35 is located at a position close to the stator main body part 22, the second rotor main body part 43 is also located at a position close to the stator main body part 22. Thus, the stator main body part 22 is subjected to both a magnetic attraction force in the direction toward the first rotor main body part 35 and a magnetic attraction force in the direction toward the second rotor main body part 43. As a result, it becomes possible to prevent a high magnetic attraction force from acting on the stator main body part 22 in only one direction, for example from only the first side of the stator main body part 22.
   Hence, it becomes possible to prevent high stress from being applied to the central member 20 that includes the stator main body part 22. Specifically, it becomes possible to prevent high stress from being applied to the fixing portions between the stator main body part 22 and the housing 21. Consequently, it becomes possible to achieve reduction in the thickness of the pair of brackets 25. Moreover, it also becomes possible to prevent the stator main body part 22 from being detached from the housing 21 even if the stator main body part 22 and the housing 21 are not fastened together with screws. As a result, it becomes possible to achieve reduction in the weight of the axial gap motor 10.
(2) In the present embodiment, in the assembly step, the first member 30 and the second member 40 are moved simultaneously at the same speed, with the central member 20 fixed immovably. Consequently, it becomes possible to perform the assembly step with the two actuators of the manufacturing apparatus 60 configured identically and operated by the same control. As a result, it becomes possible to facilitate the manufacture of the axial gap motor 10. Moreover, it also becomes possible to reduce the maximum speed in comparison with the case where the central member 20 and the second member 40 are moved simultaneously with the first member 30 fixed immovably and the second member 40 is moved at a speed twice that of the central member 20. In the case of moving the second member 40 at a speed twice that of the central member 20, the maximum speed becomes high and thus it may become difficult to control the stopping of the second member 40; in contrast, in the present embodiment, this problem can be avoided, thereby facilitating the manufacture of the axial gap motor 10.
(3) In the present embodiment, in the assembly step, the rotating shaft 31 is inserted through the second central hole 41g in a non-press-fit manner. Consequently, it becomes possible to smoothly and accurately move the second member 40 relative to the central member 20. As a result, it becomes possible to have both a magnetic attraction force in the direction toward the first rotor main body part 35 and a magnetic attraction force in the direction toward the second rotor main body part 43 suitably acting on the stator main body part 22.
(4) In the present embodiment, in the assembly step, the first core member 32 and the rotating shaft 31 are fixed together by the first bolts 36 that penetrate through the respective first temporary fixing holes 32e and the respective flange temporary fixing holes 31c. Then, in the core fixing step, the second core member 41, the first core member 32 and the rotating shaft 31 are fixed together by the second bolts 44 that penetrate through the respective second fixing holes 41d, the respective first fixing holes 32d and the respective flange fixing holes 31b. Consequently, it becomes possible to firmly fasten the second core member 41, the first core member 32 and the rotating shaft 31 together by the common second bolts 44. After the core fixing step, in the removal step, the first bolts 36, which have become no longer needed, are removed from the respective first temporary fixing holes 32e and the respective flange temporary fixing holes 31c through the respective removal holes 41e. As a result, it becomes possible to achieve reduction in the weight of the axial gap motor 10.

The present embodiment can be modified and implemented as follows. Moreover, the present embodiment and the following modifications can also be implemented in combination with each other to the extent that there is no technical contradiction between them.

In the above-described embodiment, in the assembly step, the first member 30 and the second member 40 are moved simultaneously at the same speed, with the central member 20 fixed immovably. However, the present disclosure is not limited to this manner.

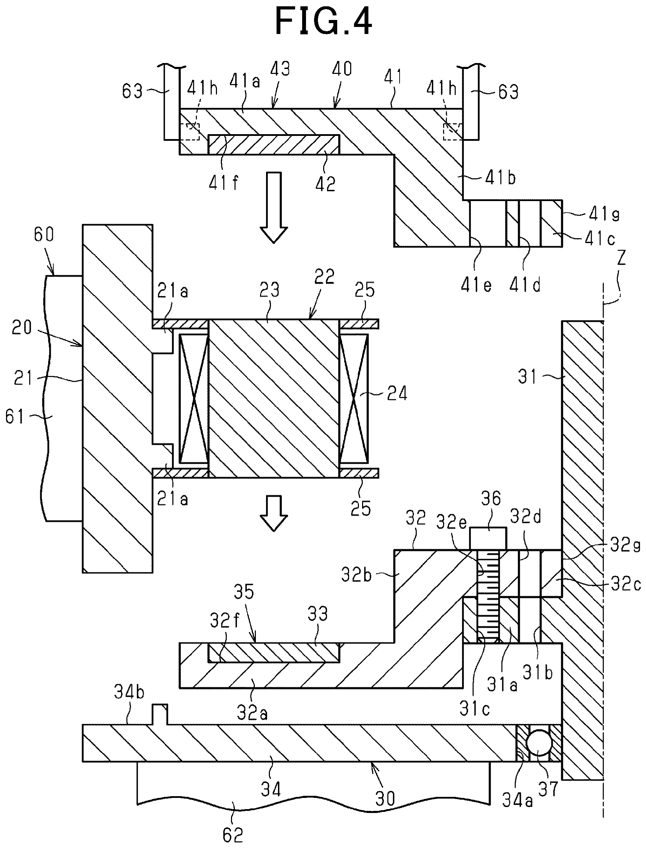

For example, as shown in FIG. 4, in the assembly step, the central member 20 and the second member 40 may be moved simultaneously with the first member 30 fixed immovably; and the second member 40 may be moved at a speed twice that of the central member 20. In this example, by driving actuators connected respectively with the central holding part 61 and the second holding part 63, the central member 20 and the second member 40 are moved simultaneously with the speed of the second member 40 being twice that of the central member 20 (see the white arrows in FIG. 4).

According to this example, it is also possible to achieve the same advantageous effects (1), (3) and (4) as achievable according to the above-described embodiment. In addition, according to this example, the two actuators of the manufacturing apparatus are moved in the same direction (i.e., the downward direction in FIG. 4) in the assembly step, thereby facilitating the manufacture of the axial gap motor 10.

In the above-described embodiment, the flange fixing holes 31b and the flange temporary fixing holes 31c are arranged side by side in the radial direction; the first fixing holes 32d and the first temporary fixing holes 32e are arranged side by side in the radial direction; and the second fixing holes 41d and the removal holes 41e are arranged side by side in the radial direction. However, the present disclosure is not limited to this arrangement.

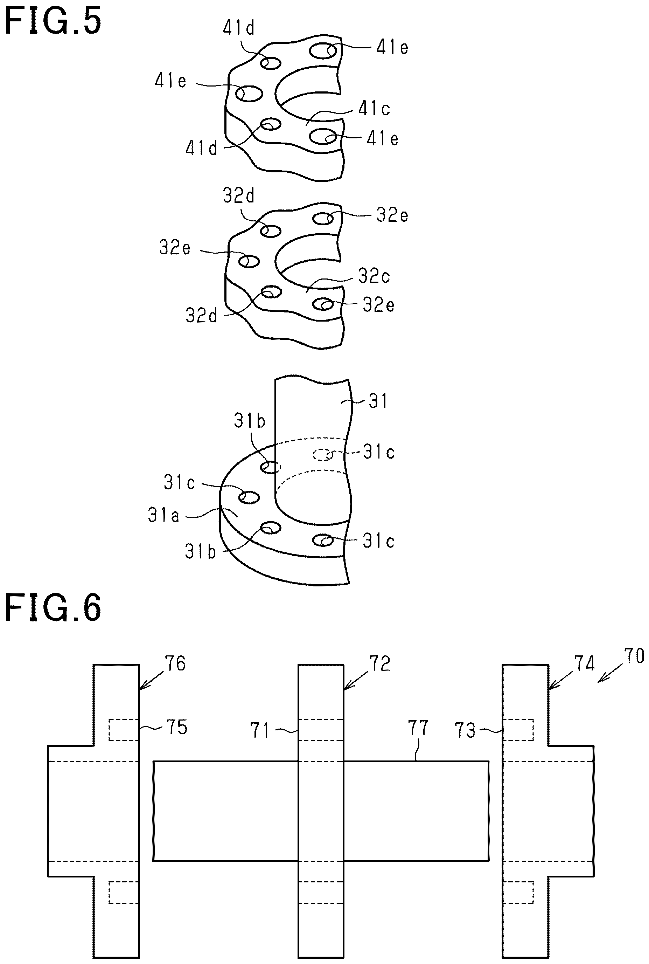

For example, as shown in FIG. 5, the flange fixing holes 31b and the flange temporary fixing holes 31c may be arranged side by side in the circumferential direction; the first fixing holes 32d and the first temporary fixing holes 32e may be arranged side by side in the circumferential direction; and the second fixing holes 41d and the removal holes 41e may be arranged side by side in the circumferential direction. Moreover, in this example, the flange fixing holes 31b and the flange temporary fixing holes 31c are arranged alternately at equal angular intervals of 45° in the circumferential direction; the first fixing holes 32d and the first temporary fixing holes 32e are arranged alternately at equal angular intervals of 45° in the circumferential direction; and the second fixing holes 41d and the removal holes 41e are arranged alternately at equal angular intervals of 45° in the circumferential direction. According to this example, it becomes possible to reduce the radial lengths of the flange portion 31a, the first inward extension portion 32c and the second inward extension portion 41c.

In the above-described embodiment, the first core member 32 and the second core member 41 are configured to be both fixed to the single flange portion 31a of the rotating shaft 31. However, the present disclosure is not limited to this configuration. For example, the first core member 32 and the second core member 41 may alternatively be configured to be connected to different flange portions of the rotating shaft 31. As another alternative, the second core member 41 may be fixed to the first core member 32, thereby being fixed to the rotating shaft 31 via the first core member 32. In such a case, the method of manufacturing the axial gap motor 10 may not include the removal step described in the above embodiment.

In the above-described embodiment, in the assembly step, the central member 20, the first member 30 and the second member 40 are moved relative to each other so as to cause the first rotor main body part 35 and the second rotor main body part 43 to simultaneously approach the stator main body part 22. However, the present disclosure is not limited to this manner. For example, in the assembly step, the central member 20, the first member 30 and the second member 40 may alternatively be moved relative to each other so as to cause the first rotor main body part 35 and the second rotor main body part 43 to alternately gradually approach the stator main body part 22.

In the above-described embodiment, the central member 20 includes the tubular housing 21. However, the present disclosure is not limited to this configuration. Other configurations may alternatively be employed where the central member 20 includes at least the stator main body part 22. Moreover, the configuration of the stator main body part 22 may also be modified. For example, the stator main body part 22 may be fixed to the housing 21 in a manner different from that described in the above-described embodiment. Furthermore, the stator main body part 22 may be molded with resin.

In the above-described embodiment, the first member 30 includes the rotating shaft 31, the first core member 32, the first magnets 33 and the first end plate 34. However, the present disclosure is not limited to this configuration. Other configurations may alternatively be employed where the first member 30 includes at least the first rotor main body part 35. Moreover, the configuration of the first rotor main body part 35 may also be modified.

In the above-described embodiment, the second member 40 includes the second core member 41 and the second magnets 42. However, the present disclosure is not limited to this configuration. Other configurations may alternatively be employed where the second member 40 includes at least the second rotor main body part 43. Moreover, the configuration of the second rotor main body part 43 may also be modified.

In the above-described embodiment, a method according to the present disclosure is embodied as a method of manufacturing the axial gap motor 10 in which the stator main body part 22 is sandwiched between the first rotor main body part 35 and the second rotor main body part 43. However, the present disclosure is not limited to this method.

For example, a method according to the present disclosure may be embodied as a method of manufacturing an axial gap motor 70 schematically shown in FIG. 6. The axial gap motor 70 includes: a central member 72 that includes a rotor main body part 71; a first member 74 that includes a first stator main body part 73; and a second member 76 that includes a second stator main body part 75. The rotor main body part 71 is fixed to a rotating shaft 77 and arranged at a center of the axial gap motor 70 in an axial direction of the rotating shaft 77. The first stator main body part 73 is arranged on a first side (i.e., the right side in FIG. 6) of the rotor main body part 71 in the axial direction so as to face the rotor main body part 71. The second stator main body part 75 is arranged on a second side (i.e., the left side in FIG. 6) of the rotor main body part 71 in the axial direction so as to face the rotor main body part 71; the second side is opposite to the first side.

The method of manufacturing the axial gap motor 70 includes an assembly step. In the assembly step, the central member 72, the first member 74 and the second member 76 are moved relative to each other so as to cause the first stator main body part 73 and the second stator main body part 75 to simultaneously approach the rotor main body part 71 or to alternately gradually approach the rotor main body part 71.

Consequently, when the first stator main body part 73 is located at a position close to the rotor main body part 71, the second stator main body part 75 is also located at a position close to the rotor main body part 71. Thus, the rotor main body part 71 is subjected to both a magnetic attraction force in the direction toward the first stator main body part 73 and a magnetic attraction force in the direction toward the second stator main body part 75. As a result, it becomes possible to prevent a high magnetic attraction force from acting on the rotor main body part 71 in only one direction, for example from only the first side of the rotor main body part 71.

Hence, it becomes possible to prevent high stress from being applied to the central member 72 that includes the rotor main body part 71. Specifically, it becomes possible to prevent high stress from being applied to the fixing portions between the rotor main body part 71 and the rotating shaft 77. As a result, it becomes possible to simplify the fixing structure between the rotor main body part 71 and the rotating shaft 77.

While the present disclosure has been described pursuant to the embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

The features of the present disclosure are noted as follows.
[1] A method of manufacturing an axial gap motor (10),
   the axial gap motor having a stator main body part (22) arranged at a center thereof in an axial direction of a rotating shaft (31), a first rotor main body part (35) arranged on a first side of the stator main body part in the axial direction so as to face the stator main body part, and a second rotor main body part (43) arranged on a second side of the stator main body part in the axial direction so as to face the stator main body part, the second side being opposite to the first side,
   the method comprising an assembly step of moving a central member (20), a first member (30) and a second member (40) relative to each other so as to cause the first rotor main body part and the second rotor main body part to simultaneously approach the stator main body part or to alternately gradually approach the stator main body part, the central member including the stator main body part, the first member including the first rotor main body part, the second member including the second rotor main body part.
[2] The method as set forth in the above note [1], wherein in the assembly step, the first member and the second member are moved simultaneously at the same speed, with the central member fixed immovably.
[3] The method as set forth in the above note [1], wherein in the assembly step:
   the central member and the second member are moved simultaneously with the first member fixed immovably; and
   the second member is moved at a speed twice that of the central member.
[4] The method as set forth in any one of the above notes [1] to [3], wherein the central member includes a tubular housing (21) to which an outer periphery of the stator main body part is fixed.
[5] The method as set forth in any one of the above notes [1] to [4], wherein:
   the first rotor main body part has a plurality of first magnets (33) arranged in a circumferential direction and a first rotor core portion (32a) to which the first magnets are fixed;
   the first member includes a first core member (32), which has the first rotor core portion and a first central hole (32g), and the rotating shaft penetrating through the first central hole and fixed to the first core member;
   the second rotor main body part has a plurality of second magnets (42) arranged in the circumferential direction and a second rotor core portion (41a) to which the second magnets are fixed;
   the second member includes a second core member (41) that has the second rotor core portion and a second central hole (41g);
   in the assembly step, the rotating shaft is inserted through the second central hole in a non-press-fit manner; and
   the method further comprises a core fixing step of fixing the second core member to the rotating shaft after the assembly step.
[6] The method as set forth in the above note [5], wherein:
   the rotating shaft has a flange portion (31a) extending radially outward;
   the flange portion has a flange fixing hole (31b) and a flange temporary fixing hole (31c);
   the first core member has a first fixing hole (32d) and a first temporary fixing hole (32e);
   the second core member has a second fixing hole (41d) and a removal hole (41e);
   in the assembly step, the first core member and the rotating shaft are fixed together by a first bolt (36) that penetrates through the first temporary fixing hole and the flange temporary fixing hole;
   in the core fixing step, the second core member, the first core member and the rotating shaft are fixed together by a second bolt (44) that penetrates through the second fixing hole, the first fixing hole and the flange fixing hole; and
   the method further comprises a removal step of removing the first bolt from the first temporary fixing hole and the flange temporary fixing hole through the removal hole after the core fixing step.
[7] A method of manufacturing an axial gap motor (70),
   the axial gap motor having a rotor main body part (71) arranged at a center thereof in an axial direction of a rotating shaft (77), a first stator main body part (73) arranged on a first side of the rotor main body part in the axial direction so as to face the rotor main body part, and a second stator main body part (75) arranged on a second side of the rotor main body part in the axial direction so as to face the rotor main body part, the second side being opposite to the first side,
   the method comprising an assembly step of moving a central member (72), a first member (74) and a second member (75) relative to each other so as to cause the first stator main body part and the second stator main body part to simultaneously approach the rotor main body part or to alternately gradually approach the rotor main body part, the central member including the rotor main body part, the first member including the first stator main body part, the second member including the second stator main body part.

## Claims

1. A method of manufacturing an axial gap motor (10),
the axial gap motor having a stator main body part (22) arranged at a center thereof in an axial direction of a rotating shaft (31), a first rotor main body part (35) arranged on a first side of the stator main body part in the axial direction so as to face the stator main body part, and a second rotor main body part (43) arranged on a second side of the stator main body part in the axial direction so as to face the stator main body part, the second side being opposite to the first side,
the method comprising an assembly step of moving a central member (20), a first member (30) and a second member (40) relative to each other so as to cause the first rotor main body part and the second rotor main body part to simultaneously approach the stator main body part or to alternately gradually approach the stator main body part, the central member including the stator main body part, the first member including the first rotor main body part, the second member including the second rotor main body part.

2. The method as set forth in Claim 1, wherein in the assembly step, the first member and the second member are moved simultaneously at the same speed, with the central member fixed immovably.

3. The method as set forth in Claim 1, wherein in the assembly step:
the central member and the second member are moved simultaneously with the first member fixed immovably; and
the second member is moved at a speed twice that of the central member.

4. The method as set forth in Claim 1, wherein the central member includes a tubular housing (21) to which an outer periphery of the stator main body part is fixed.

5. The method as set forth in Claim 1, wherein:
the first rotor main body part has a plurality of first magnets (33) arranged in a circumferential direction and a first rotor core portion (32a) to which the first magnets are fixed;
the first member includes a first core member (32), which has the first rotor core portion and a first central hole (32g), and the rotating shaft penetrating through the first central hole and fixed to the first core member;
the second rotor main body part has a plurality of second magnets (42) arranged in the circumferential direction and a second rotor core portion (41a) to which the second magnets are fixed;
the second member includes a second core member (41) that has the second rotor core portion and a second central hole (41g);
in the assembly step, the rotating shaft is inserted through the second central hole in a non-press-fit manner; and
the method further comprises a core fixing step of fixing the second core member to the rotating shaft after the assembly step.

6. The method as set forth in Claim 5, wherein:
the rotating shaft has a flange portion (31a) extending radially outward;
the flange portion has a flange fixing hole (31b) and a flange temporary fixing hole (31c);
the first core member has a first fixing hole (32d) and a first temporary fixing hole (32e);
the second core member has a second fixing hole (41d) and a removal hole (41e);
in the assembly step, the first core member and the rotating shaft are fixed together by a first bolt (36) that penetrates through the first temporary fixing hole and the flange temporary fixing hole;
in the core fixing step, the second core member, the first core member and the rotating shaft are fixed together by a second bolt (44) that penetrates through the second fixing hole, the first fixing hole and the flange fixing hole; and
the method further comprises a removal step of removing the first bolt from the first temporary fixing hole and the flange temporary fixing hole through the removal hole after the core fixing step.

7. A method of manufacturing an axial gap motor (70),
the axial gap motor having a rotor main body part (71) arranged at a center thereof in an axial direction of a rotating shaft (77), a first stator main body part (73) arranged on a first side of the rotor main body part in the axial direction so as to face the rotor main body part, and a second stator main body part (75) arranged on a second side of the rotor main body part in the axial direction so as to face the rotor main body part, the second side being opposite to the first side,
the method comprising an assembly step of moving a central member (72), a first member (74) and a second member (75) relative to each other so as to cause the first stator main body part and the second stator main body part to simultaneously approach the rotor main body part or to alternately gradually approach the rotor main body part, the central member including the rotor main body part, the first member including the first stator main body part, the second member including the second stator main body part.
